# EUROPÄISCHE PATENTANMELDUNG

(11) **EP 4 800 976 A1**
(43) Veröffentlichungstag der Anmeldung: **02.09.2026**
(21) Anmeldenummer: 25161038.2
(22) Anmeldetag: 28.02.2025
(51) Int. Cl.: H04L 9/32, H04L 9/00

(54) **EFFIZIENTE SIGNATURERZEUGUNG INKLUSIVE VERBESSERTE KRYPTO-AGILITÄT FÜR GERÄTE MIT BEGRENZTEN RESSOURCEN**

(71) Anmelder: Siemens Aktiengesellschaft, 80333 München (DE)
(72) Erfinder: Safieh, Malek, 81539 München (DE); Schneider, Daniel, 80796 München (DE)
(74) Vertreter: Siemens Patent Attorneys

(57) **Zusammenfassung**

Die Erfindung betrifft die sichere Übertragung von Daten von einem Sender zu einem Empfänger mit Hilfe eines Signierdienstes. Dabei sind folgende Schritte vorgesehen:
- Senden der Daten oder eines Hashwerts der Daten von dem Sender an den Signierdienst,
- Bilden eines Hash-Baums durch den Signierdienst mit Hilfe des empfangenen Hashwerts oder eines auf Basis der Daten generierten Hashwerts,
- Signieren des Root-Hash-Wertes des Hash-Baums mit einem privaten Schlüssel des Signierdienstes,
- Senden des signierten Root-Hash-Wertes und von Werten eines dem Sender zugeordneten Authentisierungspfads des Hash-Baums vom Signierdienst an den Sender,
- Senden der Daten, des signierten Root-Hash-Wertes und der Werte des dem Sender zugeordneten Authentisierungspfad des Hash-Baums von dem Sender an den Empfänger,
- Verifizieren der Signatur des Root-Hash-Wertes mittels der Signatur zugeordneten Verifizierungsmittel durch den Empfänger und
- Verifizieren der Daten durch Bildung eines Hashwertes der Daten und Berechnung eines Root-Hash-Wertes aus dem Hashwert der Daten und den Werten des dem Sender zugeordneten Authentisierungspfads des Hash-Baums.

Das Verfahren erlaubt eine sichere, aber aufwandsarme Signierung, die insb. auch für Sendegeräte mit beschränkten Ressourcen geeignet ist.

## Beschreibung

Die Erfindung betrifft ein Verfahren und ein System zur sicheren Übertragung von Daten von einem Sender zu einem Empfänger mit Hilfe eines Signierdienstes.

IoT-Geräte sind heutzutage immer mehr vernetzt. Dies gilt auch für Geräte mit beschränkten Ressourcen (Rechenleistung, Speicher usw). Daher besteht ein Bedarf an Sicherheitskonzepten für solchen Geräten, die mit moderatem Rechenaufwand auskommen und eine möglichst geringe Komplexität aufweisen.

Typischerweise basiert die Sicherheit von kryptografischen Verfahren auf symmetrischer Kryptographie (z.B. AES (Advanced Encryption Standard), AES-GCM (Advanced Encryption Standard (AES) im Galois Counter Mode (GCM)) usw.) und asymmetrischer Kryptographie (z.B. Elliptische Kurven beispielsweise Elliptic Curve Digital Signature Algorithm (ECDSA), RSA (Rivest-Shamir-Adleman) usw.). Algorithmen der asymmetrischen Kryptographie bieten Unterstützung für wichtige Funktionalitäten, wie digitale Signaturen oder Verfahren zum Schlüsselaustausch (z.B. im Kontext von Diffie-Hellman), sind jedoch deutlich rechenaufwendiger als symmetrische kryptographische Verfahren.

Zusätzlich stellt die Entwicklung von Quanten-Computern insbesondere für asymmetrische Kryptographie eine Gefahr dar, da das darunterliegende mathematische Problem als gebrochen gilt. Bei symmetrischen Algorithmen kann dagegen durch Quanten-Computer die Sicherheit der symmetrischen Schlüssel auf die Hälfte reduziert werden, wodurch eine Verdoppelung der Schlüssellänge bei gleichbleibendem Algorithmus aus heutiger Sicht als ausreichend gesehen wird. Um der Risiken bei der asymmetrischen Verschlüsselung zu kontrollieren, wurde der Einsatz neuer Algorithmen für digitale Signaturen vorgeschlagen, die deutlich rechenaufwendiger als klassische asymmetrische Algorithmen sind. Ebenso müssen Schlüsselaustausch-Algorithmen (z.B. Diffie-Hellman) mit Key Encapsulation Mechanisms (KEM) für Post-Quantum Cryptography (PQC) ersetzt werden.

Daher ist die Sicherheit von Geräten mit beschränkten Ressourcen oftmals nur auf symmetrische Kryptoverfahren basiert, jedoch keine asymmetrische Kryptoverfahren, was eine sichere Kommunikation über unsichere Netze erschwert, z.B. für ein Schlüsselupdate.

Die bekannten Methoden der symmetrischen Kryptografie stellen hierbei nur beschränkt zufriedenstellende Lösungen bereit.

In Verwendung sind Verfahren der symmetrischen Kryptografie, die auf mittels einer Hashfunktion erzeugte Hashwerte aufsetzen, z.B. Verfahren auf Basis von Hash-Bäumen (Merkle Tree).

Bekannt ist auch, dass sich Einmal-Signaturverfahren bzw. OTS-Verfahren (OTS: one time signature) wie das von Lamport für Postquantenkryptographie (PQC) eignen.

Es gibt zudem PQC-Standards für Hashwert-basierte Signaturalgorithmen (die auf Hash-Bäumen basieren), z.B.
- XMSS: https://www.rfc-editor.org/rfc/rfc8391.html
- LMS: https://www.rfc-editor.org/rfc/rfc8554.html

Bekannt ist auch die Verwendung von Tickets bzw. Token als Authentisierungsinformation. Zudem können auf die Session (d.h. die Client-Server-Verbindung) bezogene Informationen im Zuge der Einbeziehung einer dritten Instanz (typischerweise Authentisierungs-Server) verwendet werden. Folgende Methoden, die unterschiedliche symmetrische kryptographische Verfahren verwenden, sind entsprechend konzipiert:
- TESLA

TESLA (Timed Efficient Stream Loss-tolerant Authentication protocol, vgl. IETF RFC 4082) erlaubt die Authentisierung der Quelle in Multicast-Szenarien. Es handelt sich bei TESLA um ein effizientes Protokoll mit einem geringen Kommunikations-Overhead und moderaten Rechenaufwand, welches gut mit der Anzahl der Empfänger skaliert und Paketverluste toleriert. TESLA basiert auf einer losen Zeitsynchronisation zwischen Sender und Empfänger. Für die Authentisierung der Quelle verwendet TESLA das sog. Message Authentication Code (MAC) Chaining. Die zentrale Eigenschaft der Chain bzw. Kette ist, dass nach der Authentisierung eines Schlüssels der Kette die Authentisierung weiterer Schlüssel der Kette vereinfacht funktioniert. Für die Authentisierung der ursprünglichen Nachricht kommen digitale Signaturen zum Einsatz (vgl. http://www.ece.cmu.edu/~adrian/projects/tesla-cryptobytes/tesla-cryptobytes.pdf).
- µTESLA

µTESLA zielt auf Netzwerke von Sensoren und optimiert TESLA für derartige Szenarien. Der allgemeine Setup geht von einer Basisstation aus, die eine authentisierte Verbindung zu Sensorknoten basierend auf einem gemeinsamen Geheimnis aufweist. Da die digitale Signatur für den anfänglichen Nachrichtenschutz in TESLA für die Sensorknoten zu kostspielig ist, wird dies in µTESLA durch die Verwendung des authentisierten Kanals zwischen Knoten und Basisstation für den Start der authentisierten Übertragung gelöst. Der Rest des Protokolls ist dem ursprünglichen TESLA-Ansatz ähnlich (vgl. http://www.ece.cmu.edu/~adrian/projects/mc2001/mc2001.pdf).
- Kerberos (IETF RFC 4120):
   Kerberos verwendet symmetrische Kryptographie nur zur Authentisierung von Clients und Servern gegenüber dem Authentisierungsdienst eines Kerberos-Servers, der einen sog. Ticket Granting Service verwendet, um symmetrisch verschlüsselte Tickets mit Sitzungsinformationen für eine bestimmte Dienstnutzung auszustellen. Die Sitzungsinformationen können die Identitäten der beteiligten Peers und Sitzungsschlüsselinformationen umfassen. Da keine asymmetrische Kryptographie verwendet wird, können die Vorteile von digitalen Signaturen in Kerberos nicht genutzt werden. Dabei ist zu berücksichtigen, dass es Erweiterungen für Kerberos gibt, die die Verwendung von X.509-Zertifikaten für die anfängliche Client-Authentisierung in RFC 4556 ermöglichen.

Es besteht ein Bedarf für zusätzliche aufwandsarme Lösungen, die auch für Geräte mit beschränkten Ressourcen sowohl für Pre- als auch Post-Quantum Anwendungen geeignet zur Unterstützung von digitalen Signaturen sind. Die Aufgabe der Erfindung besteht darin, hierzu beizutragen.

Die Aufgabe wird gelöst durch ein Verfahren nach Anspruch 1, einen Signierdienst nach Anspruch 12 und ein System nach Anspruch 13.

Erfindungsgemäß wird ein Verfahren zur sicheren Übertragung von Daten von einem Sender zu einem Empfänger mit Hilfe eines Signierdienstes vorgeschlagen. Der erfindungsgemäße Signierdienst ist z.B. mittels einer Vorrichtung realisiert, die als Server fungieren kann. Es ist aber auch eine auf einer Zuweisung von Ressourcen eines Pools von Hardwareressourcen basierende virtuelle Realisierung denkbar. Insbesondere ist dann auch ein Lastenausgleich zwischen den Poolressourcen möglich.

Erfindungsgemäß werden Daten oder ein Hashwert der Daten von dem Sender an den Signierdienst gesendet. Dabei kann für die Kommunikation im Rahmen der Erfindung zwischen Sender und Signierdienst eine symmetrische Verschlüsselung vereinbart sein bzw. werden und die Kommunikation mittels dieser Verschlüsselung geschützt werden. Dafür kann beispielsweise ein Austausch eines symmetrischen Schlüssels zwischen dem Sender und dem Signierdienst im Voraus erfolgen (pre-shared Schlüssel), womit der Hashwertes der Daten oder bzw. die Daten durch den Sender verschlüsselt und/oder mit einem Authentication-Tag bzgl. der Integrität geschützt werden kann. Dafür kann ein symmetrischer Algorithmus für authentisierte Verschlüsselung (authenticated encryption) verwendet werden, wie ASCON oder AES-GCM. Generell ist vorzugsweise die Kommunikation zwischen Sender und Signierdienst geschützt. Dies erfolgt nicht notwendigerweise mittels eines Schlüssels. Z.B. kann die Verbindung aus physikalischen Gründen sicher sein (intrinsisch sicherer Kommunikationsträger bzw. Kommunikationskanal).

Der Signierdienst bildet einen Hash-Baums mit Hilfe des empfangenen Hashwerts oder eines auf Basis der Daten generierten Hashwerts. Die Bildung eines Hashwertes würde durch Anwenden einer Hashfunktion auf die Daten erfolgen. Es gibt unterschiedliche Hash-Algorithmen. Manche sind sicherer als andere für Postquantum Anwendungen. So wird z.B. für Postquantum-Anwendungen SHA-3 als Hash Algorithmus empfohlen. Je nachdem, ob das Konzept der Erfindung für Klassik- oder Postquantum-Anwendungen angewendet werden soll, wird vorzugsweise durchgehend ein passender Hash-Algorithmus mit ausreichendem Sicherheitslevel verwendet.

Der Hash-Baum wird vorzugsweise mit Hashwerten von Daten einer Mehrzahl von verschiedenen Sendern gebildet. Dabei kann auch eine Mehrzahl von Blättern des Hash-Baums mit verschiedenen Daten desselben Senders gebildet werden, wenn entsprechend mehrere Signieranforderungen von diesem Sender anfallen, bevor zur Bildung des Hash-Baums ausreichend Daten anderer Sender empfangen wurden. Im Extremfall kann es sein, dass alle Blätter demselben Sender zugeordnet sind. Generell ist es sinnvoller, die Blätter chronologisch zu generieren bzw. zu ordnen, als die Blätter des Hash-Baums nach dem Sender anzuordnen.

Es ist auch denkbar, dass der Hash-Baum mit zusätzlichen Dummy-Werten gebildet wird, wenn nicht ausreichend Daten von verschiedenen Sendern (darunter ggf. auch mehrere verschiedene Daten vom selben Sender) zur Verfügung stehen ("Daten" kann hier auch sich auf Hashwerte von Daten beziehen, die von einem Sender an einen Empfänger übermittelt werden sollen).

Beispielsweise kann der Rückgriff auf Dummy-Werte von einem Timer bzw. Zeitgeber abhängig gemacht werden. D.h., wenn innerhalb einer vorgegebenen Zeitspanne kein vollständiger Hash-Baum mit den Daten der Sender gebildet werden kann, wird auf Dummy-Werte zurückgegriffen. Dummy-Werte wären dann nötig, wenn das Aufkommen an Signierungsanforderungen niedrig ist. Generell kann auch eine Anpassung an das Aufkommen stattfinden, indem die Größe des Hash-Baums nach Maßgabe der Anzahl der Signierungsanforderungen von Sendern dynamisch angepasst wird (die Anzahl kann dabei auf einen vorgegebenen Zeitraum bezogen sein).

Erfindungsgemäß wird vorzugsweise nur der Root-Hash-Wert des Hash-Baums wird mit einem privaten Schlüssel des Signierdienstes signiert. D.h., der Schlüssel gehört zu einem asymmetrischen Signierverfahren. Dieses kann gemäß einer Ausgestaltung auch durch eine berechtigte Instanz aktualisierbar sein und erfordert nicht die Unterstützung von asymmetrischen Verfahren bei Endgeräten.

Der signierte Root-Hash-Wert und Werte eines dem Sender zugeordneten Authentisierungspfads des Hash-Baums (typischerweise umfasst der Authentisierungspfad die für Berechnung vom Root-Hash erforderlichen Werte) werden vom Signierdienst an den Sender übertragen (vorzugsweise über einen geschützten Kanal). Das Übertragen erfolgt vorzugsweise mittels einer Nachricht, kann aber auch mit mehreren Nachrichten realisiert werden.

Alternativ können der signierte Root-Hash-Werte und/oder die Werte eines dem Sender zugeordneten Authentisierungspfads nach Übermittlung einer auf den Empfänger bezogenen Adressinformation direkt von dem Signierdienst an den Empfänger gesendet werden. Ausgestaltungen, die unter diese Alternative des direkten Sendens subsumiert werden, sind, dass der Hash-Baum separat z.B. vom Signierdienst publiziert oder an jeden Empfänger geschickt wird.

Vom Sender werden anschließend die Daten, der signierte Root-Hash-Wert und die Werte des dem Sender zugeordneten Authentisierungspfads des Hash-Baums von dem Sender an den Empfänger gesendet. Das Senden erfolgt vorzugsweise mittels einer Nachricht, kann aber auch mit mehreren Nachrichten realisiert werden. Dieser verifiziert die Signatur des Root-Hash-Wertes mittels der Signatur zugeordneten Verifizierungsmittel (z.B. ein dem Signierdienst zugehöriger öffentlicher Schlüssel und/oder ein dem Signierdienst zugehöriges Zertifikat, welche mitgeschickt oder separat bereitgestellt sein können) und die Daten mittels Bildung eines Hashwertes der Daten mit anschließender Berechnung eines Root-Hash-Wertes aus dem Hashwert der Daten und den Werten des dem Sender zugeordneten Authentisierungspfads des Hash-Baums.

Gemäß einer Ausgestaltung wird durch den Sender eine Identifikationsinformation an den Signierdienst übermittelt (zusammen mit den Daten bzw. deren Hashwert oder vorab). Der Hash-Baum wird dann mit Hilfe der Identifikationsinformation gebildet (die Blätter des Hash-Baums sind dann z.B. als Zweitupel bzw. Konkatenation aus Hashwert und Identitätsinformation konzipiert). Es kann dann mit den Daten, den signierten Root-Hash-Werte und den Werten des dem Sender zugeordneten Authentisierungspfad des Hash-Baums auch eine Identifikationsinformation von dem Sender an den Empfänger gesendet und durch den Sender eine Verifikation der Identitätsinformation vorgenommen werden (z.B. durch Berechnung von Root-Hash: wegen der Bildung des Hash-Baums aus Hashwerten von Daten und Identifikationsinformationen führt ein Fehler bei einem von beidem zu einem falschen Root-Hash).

Gemäß einer weiteren Ausgestaltung wird beim Senden der Daten oder eines Hashwerts der Daten an den Signierdienst eine Frehness-Information (z.B. Nonce, Zufallszahl oder Zeitstempel) mitgesendet und beim Senden des signierten Root-Hash-Wertes und von Werten eines dem Sender zugeordneten Authentisierungspfads des Hash-Baums vom Signierdienst an den Sender zurückgesendet. Dies gewährleistet einen gewissen Schutz gegen Replay-Attacken.

Durch die Erfindung ist eine aufwandsarme Signierung insb. auch für Sendegeräte mit beschränkten Ressourcen möglich. Das Vorgehen eignet sich für Pre- und Post-Quantum Anwendungen und einen weiten Anwendungsbereich (z.B. IT und OT-Anwendungen).

Im Folgenden wird die Erfindung im Rahmen von Ausführungsbeispielen anhand von Figuren näher erläutert. Es zeigen
Fig. 1: bei den Ausführungsbeispiel beteiligte Instanzen (hier mit vier Sendern und vier Empfängern),
Fig. 2: ein Beispiel für den Aufbau einer signierten Nachricht an einen Empfänger,
Fig. 3: ein Beispiel für einen Hash-Baum mit vier Blättern,
Fig. 4: ein Ablaufbild für ein erstes Ausführungsbeispiel des erfindungsgemäßen Verfahrens,
Fig. 5: ein Ablaufbild für ein zweites Ausführungsbeispiel des erfindungsgemäßen Verfahrens,
Fig. 6: ein Ablaufbild für ein drittes Ausführungsbeispiel des erfindungsgemäßen Verfahrens und
Fig. 7: einen Vergleich von kryptographischen Operationen des erfindungsgemäßen Konzepts und einer Variante des Standes der Technik, bei dem ein Signierdienst für jede Nachricht der Clients eine Signatur einzeln erzeugt.

Die Konzepte dieser Erfindung sind insbesondere (aber nicht nur) für Geräte mit beschränkten Ressourcen interessant. Als Beispielsanwendung zum Verständnis dieser Erfindung wird ein System betrachtet, das mehrere bzgl. der Ressourcen beschränkte Geräte umfasst, welche keine asymmetrische Kryptographie unterstützen. Erfindungsgemäß kümmert sich eine leistungsfähige Partei (Signierdienst-Server) um die Erstellung digitaler Signaturen.

Ein zentraler Gedanke dieser Erfindung liegt darin, dass die Anzahl von verwendeten Signaturen mit Hilfe eines Merkle (Hash) Baums und eines Signierdienstes reduziert werden kann. Das Konzept ist auch deswegen interessant, weil die Berechnung von digitalen Signaturen rechenaufwendiger bzw. teurer als die Berechnung der Hashfunktionen für einen Hash-Baum ist, insbesondere, wenn es um Post-Quantum Signaturen geht. Dabei ist der Signierdienst dafür verantwortlich, Daten von mehreren Client-Geräten zu sammeln und mit Hilfe eines asymmetrischen Verfahrens digital zu signieren. Der Austausch der Daten zwischen dem Signierdienst und den Clients sollte in einer vertrauenswürdigen Umgebung erfolgen. Alternativ kann der Austausch der Daten zwischen dem Signierdienst und den Clients über eine sichere Kommunikation basierend auf einem symmetrischen Verfahren und vorab ausgetauschten (pre-shared) Schlüssel erfolgen. Dadurch müssen die Clients nur ein symmetrisches kryptographisches Verfahren unterstützen, welches eine geringere Komplexität gegenüber asymmetrischen Verfahren aufweist.

Für Post-Quantum Anwendungen können die Konzepte dieser Erfindung sehr effizient angewendet werden, da die Anzahl von Signaturen durch die Verwendung eines Hash-Baums reduziert wird und Post-Quantum Signaturen sehr aufwendig sind (aufwendiger als klassische Signatur-Verfahren). Ebenso bietet die Erfindung für die Migration zu Post-Quantum Anwendungen Vorteile, weil nicht alle beteiligte Parteien signieren müssen bzw. nur der sog. Signierdienst dafür verantwortlich ist. Ggf. nur dieser und der Empfänger zu Post-Quantum Signatur Verfahren migriert werden müssen. Dagegen entfällt die Notwendigkeit, den Sender zu migrieren.

Die vorgestellten Lösungen für sicheren Datenaustausch eignen sich je nach verwendeten kryptographischen Algorithmen sowohl für Anwendungen mit Prequantum- als auch Postquantum-Verschlüsselungen, wobei die Effizienz für Postquantum-Anwendungen durch das vorgeschlagene Konzept deutlich erhöht wird.

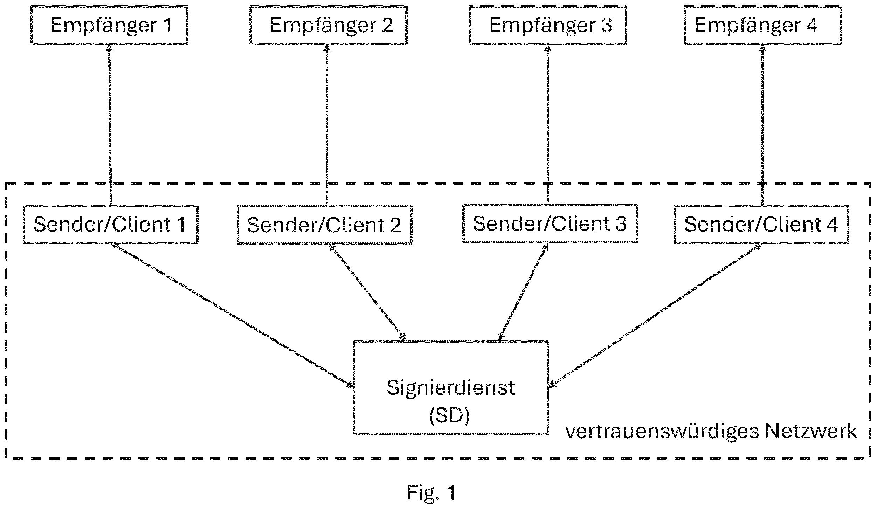

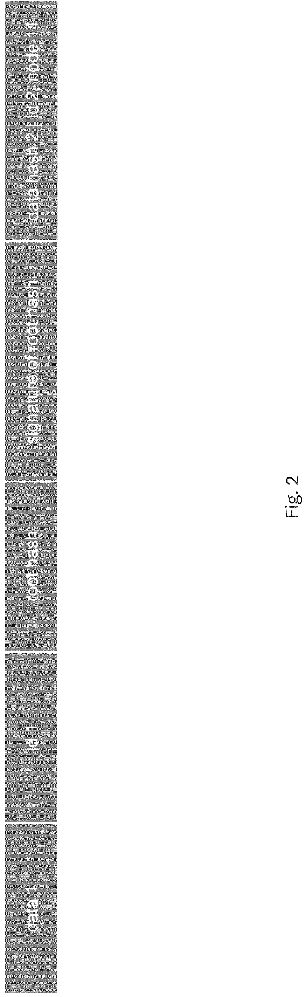

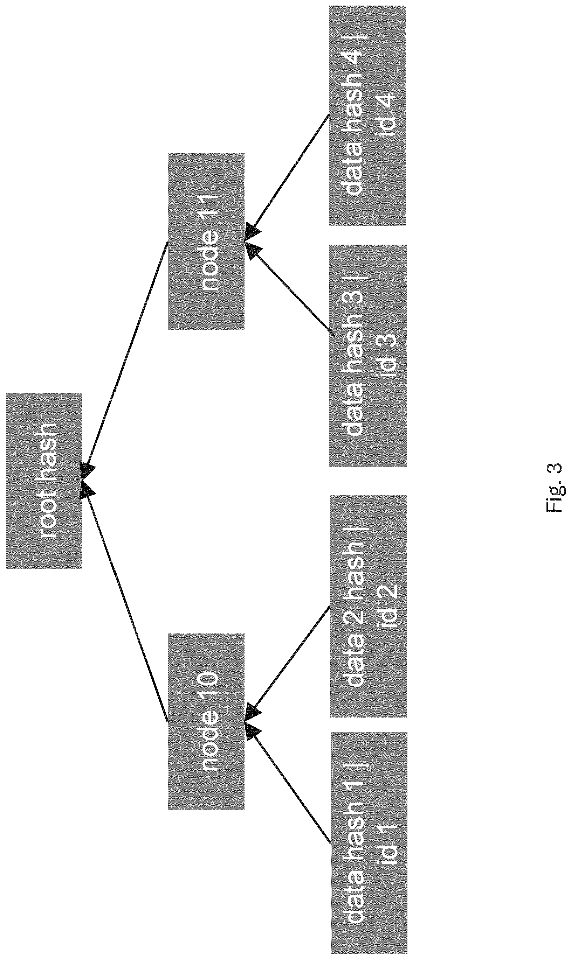

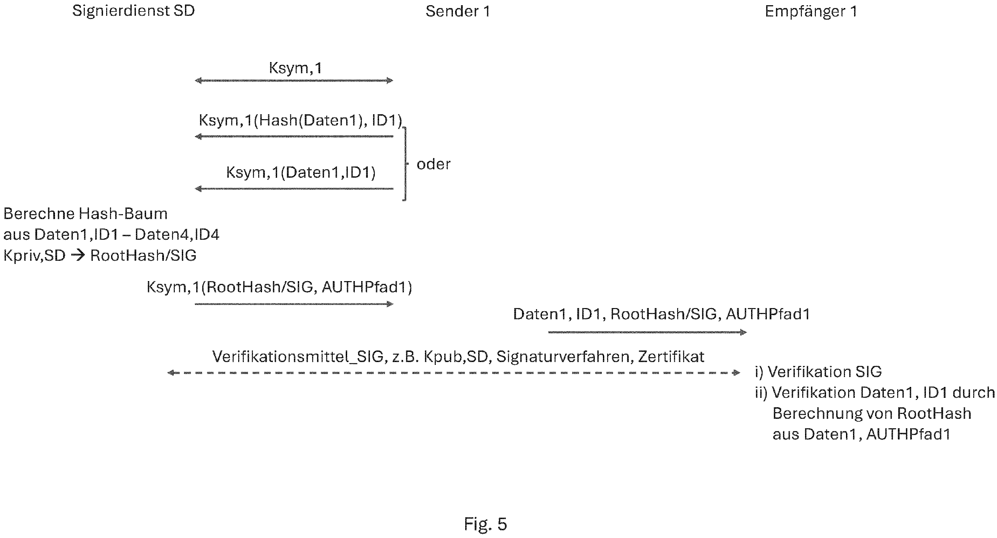

In Fig. 1 ist eine (einfache) Konstellation gezeigt, die als Beispiel zu Erläuterung im Rahmen der Ausführungsbeispiele verwendet wird. Es sind vier Sender gezeigt, die jeweils an einen Empfänger Daten versenden. Die einzelnen Empfänger sind voneinander unterschieden bzw. disjunkt. Zum Schutz der Datenübertragung greifen die Sender auf einen Signierdienst zurück. Die Übertragungsstrecken zwischen den Sendern und dem Signierdienst gehören zu einem vertrauenswürdigen Netzwerk, d.h. die Sicherheitsanforderungen zwischen den Sendern und dem Signierdienst sind niedriger als zwischen den Sendern und den Empfängern. Ein erfindungsgemäßes Verfahren kann wie folgt ablaufen (dabei wird der Sender auch als "Client" bezeichnet):
1. Client 1 bzw. Sender 1 möchte signierte Daten an Empfänger 1 schicken. Da Client 1 kein asymmetrisches Signaturverfahren, z.B. auf Grund von beschränkten Ressourcen, besitzt, kann er selbst die Daten nicht signieren.
2. Client 1 schickt auf die Daten bezogene Informationen über einen geschützten Kanal an ein in dem Netzwerk vorhanden Signierdienst (eine leistungsfähige und aus Sicht des Clients vertrauenswürdige Recheneinheit). Vorzugsweise wird dabei zunächst ein Hashwert aus den Daten vom Client 1 berechnet und an den Signierdienst über den sicheren Kanal übermittelt (alternativ können die gesamten Daten statt des Hashwertes gesendet werden - die Bildung des Hashwertes erfolgt dann durch den Signierdienst). Der sichere Kanal (Integrität und/oder Vertraulichkeit geschützt) kann dadurch realisiert werden, dass der Client die gesendeten Daten durch authentisierte Verschlüsselung (Authenticated Encryption with Associated Data (AEAD), z.B. AES-GCM bzw. Advanced Encryption Standard (AES) im Galois Counter Mode (GCM) oder ein kryptografischer Algorithmus des Typs ASCON) schützt, bevor sie an den Signierdienst geschickt werden. (Die Nomenklatur ist nicht ganz konsistent. Teilweise wird von "authentifizierter Verschlüsselung" gesprochen. Der Fachmann kommt hier unabhängig vom konkreten Begriff zum richtigen technischen Verständnis.) Der nötige symmetrische Schlüssel ksym,1 ist dabei ein pre-shared Schlüssel, der zuvor in einer vertrauenswürdigen Provisionierungsphase zwischen dem Client 1 und dem Signierdienst ausgetauscht bzw. ausgehandelt wurde. Der Signierdienst sollte natürlich dasselbe symmetrische Verfahren unterstützen und in der Lage sein, die Daten mit dem pre-shared Schlüssel wieder zu entschlüsseln bzw. zu überprüfen.
3. Der vorherige Schritt wird für die Clients 2-4 wiederholt. Die Anzahl der nötigen Clients, bzw. der nötigen Daten, die signiert werden sollen, kann jede natürliche Zahl größer-gleich eins sein.
4. Im vorliegenden Beispiel berechnet der Signierdienst anschließend einen Hash-Baum aus den von den Clients 1-4 erhalten Daten (idealerweise aus dem gerechneten Hashwert daraus - d.h. eine Zusammensetzung der von den Clients übermittelten Hashwerte zu einem Hash-Baum) (vgl. Fig. 3). Die Hashwerte - in Fig. 3 als "data hash" bezeichnet - von diesen jeweiligen Daten sind dabei die Blätter (Leafs) des Hash-Baums. Diese Hashwerte (die Blätter des Hash-Baums) können, je nach Variante dieser Erfindung und wie zuvor erwähnt, durch den jeweiligen Client oder durch den Signierdienst berechnet werden. Aus dem Blättern werden Konten bestimmt ("node 10" bzw. "node 11" in Fig. 3). Am Ende der Hash-Baum-Berechnung enthält der Baum den Root-Hash (Wurzel des Hash Trees, "root hash" in Fig. 3).
5. Der Root-Hash wird durch den Signierdienst mit dem seinem privaten Schlüssel kpriv, signingservice digital signiert.
6. Der Root-Hash, die Signatur und der jeweilige Authentisierungspfad wird an Client 1-4 zurückgeschickt, idealerweise individuell geschützt (bzgl. Integrität und/oder Vertraulichkeit) durch den pre-shared Schlüssel (authenticated encryption) des jeweiligen Clients.
7. Die Clients können daraufhin deren Daten inklusive asymmetrischer Signatur an die jeweiligen Empfänger schicken. Beispielsweise würde Client 1, entsprechend Fig. 5, Folgendes an den Empfänger 1 schicken (vgl. Fig. 2 - Beispiel für den Aufbau einer signierten Nachricht, basierend auf dem Konzept dieser Erfindung):
   ∘ data 1: Die Daten, die (durch den Signierdienst) signiert vom Client 1 an den Empfänger 1 übermittelt werden sollen.
   ∘ id 1: Die Identität von Client 1. Sofern die Signatur des Root-Hash erfolgreich verifiziert wird, kann Empfänger 1 von der Korrektheit der Identität vom Client 1 ausgehen, da Empfänger 1 dem Signierdienst vertraut.
   ∘ **root hash:** der Root-Hash als Plaintext bzw. reiner Text.
   ∘ signature of root note: Die Signatur des Root-Hash. Der Empfänger besitzt für die Verifikation dabei den öffentlichen Schlüssel bzw. das Zertifikat des Signierdiensts. Das Zertifikat kann dabei beispielsweise von einer vertrauenswürdigen Zertifizierungsstelle ausgestellt sein. Alternativ kann das Zertifikat in Fig. 2 angehängt und mitgeschickt werden.
   ∘ data hash 2 | node 11: der nötige Authentisierungspfad, um den Root Hash verifizieren zu können.
8. Der Empfänger kann daraufhin die empfangen Daten verifizieren. Beispielsweise muss hierfür Empfänger 1 für die Verifizierung der signierten Daten des Clients 1, die folgenden Schritte ausführen:
   ∘ Verifikation der Signatur vom Root-Hash (die genauen Schritte hängen vom Signaturverfahren ab). Hierfür benötigt der Receiver das digitale Zertifikat des Signierdienstes, welches beispielsweise über eine PKI vertraut wird. Alternativ muss der öffentliche Schlüssel des Signierdienstes für den Empfänger bekannt und vertrauenswürdig sein.
   ∘ Verifikation der Daten (data 1) und der Identität (id 1), indem der Hashtree nachgerechnet wird. Dies erfolgt mit Hilfe des Authentisierungspfads (data hash 2 | id 2, node 11). Wird der gleiche Root-Hash ermittelt, wie der, der empfangen wurde, so kann der Empfänger 1 davon ausgehen, dass die Daten integritätsgeschützt vom Client 1 kamen. Voraussetzung ist dabei, dass er dem Signierdienst vertraut und dass der Signierdienst (basierend auf dem öffentlichen Schlüssel oder dazugehörige Zertifikat) dem Client 1 (basierend auf dem pre-shared Schlüssel) vertraut.

### Modifikationen und Erweiterungen:

- In einer anderen Variante soll der Client in Schritt 2 nicht nur die Daten (oder der gerechnete Hashwert daraus) an den Signierdienst schicken. Zusätzlich hängt der Client seine Identität an die Daten bzw. an den Hashwert der Daten, z.B. "data hash 1 | id1", schützt diese zusammen (bzgl. Integrität und/oder Vertraulichkeit) basierend auf dem pre-shared Schlüssel und schickt diese Kombination dann dem Signierdienst. Die hinzugefügte Identität id1 (eine eindeutige Identifizierungsinformation, z.B. MAC-Adresse, Seriennummer, Barcode ...) in dieser Variante bietet zusätzliche Möglichkeiten und Vereinfachungen für den Signierdienst. Beispielsweise kann der Signierdienst die Identität eines Clients verwenden, um den passenden lokal (und geschützt) gespeicherten pre-shared symmetrischen Schlüssel effizienter eindeutig zu identifizieren, siehe beispielsweise die Blätter in Fig. 3.
- In einer weiteren Variante hängt der Client eine Nonce, eine Zufallszahl, oder einen Zeitstempel an die Daten (oder den gerechneten Hashwert daraus), schützt sie zusammen

(bzgl. Integrität und/oder Vertraulichkeit) basierend auf dem pre-shared Schlüssel und schickt diese dann dem Signierdienst. Dadurch kann die sogenannte Freshness (Sicherheit bzgl. einer realistischen Dauer) bzw. ein Schutz gegen Replay-Attacken erreicht werden. Diese Variante kann mit der vorherigen Variante kombiniert sein.
- Client 1 müsste in unserem Beispiel oben so lange auf die Signatur des Signierdienstes warten, bis vier Clients eine Signatur anfordern. Um die Wartezeit zu verringern, kann der Signierdienst nach einer definierten Zeit die (festgelegte Anzahl von) Blätter seines Hash-Baums selbst mit Dummy-Daten füllen, den Root-Hash berechnen und Client 1 zur Verfügung stellen.
- In einer anderen Variante kann die Größe (Anzahl der Blätter) des Hash-Baums vom Signierdienst dynamisch verändert oder angepasst werden. Beispielsweise, wenn eine hohe Netzwerkauslastung besteht (bzw. viele Clients Anfragen zum Signieren von Daten schicken), kann der Signierdienst einen größeren Baum rechnen, beispielsweise mit 16 Blättern. Unter normalen Umständen bzw. als Voreinstellung kann der Signierdienst einen Baum mit nur 4 Blätter rechnen. Das Ideale dabei ist, dass die Clients davon nichts wissen müssen. Die Clients kriegen den korrekten Verifizierungspfad zum signierten Root-Hash. Die Länge dieses Pfades ändert sich je nach Größe des Baums.
- Das Signaturverfahren vom Signierdienst ist durch eine berechtigte Instanz updatebar bzw. aktualisierbar.
- Das Signaturverfahren kann z.B. ein Pre- oder ein Post-Quantum Signaturverfahren sein. Möglich ist auch eine Kombination von beiden.
- Mehrere Blätter des Hash-Baums können von demselben Client kommen.
- In einer Variante müssen die Kanäle zwischen den Clients und den Empfängern nicht mit pre-shared Schlüssel und symmetrischer Kryptographie geschützt werden. Diese können z.B. physikalisch vertrauenswürdig sein (z.B. bei einer festen Kabelverbindung).
- Das Konzept dieser Erfindung ist flexible. Das heißt es kann einfach auf mehrere Signierdienst-Einheiten angewendet werden, die den Aufwand für die Bearbeitung von Anfragen von allen Clients aufteilen (Pool an Signierdienst-Ressourcen).

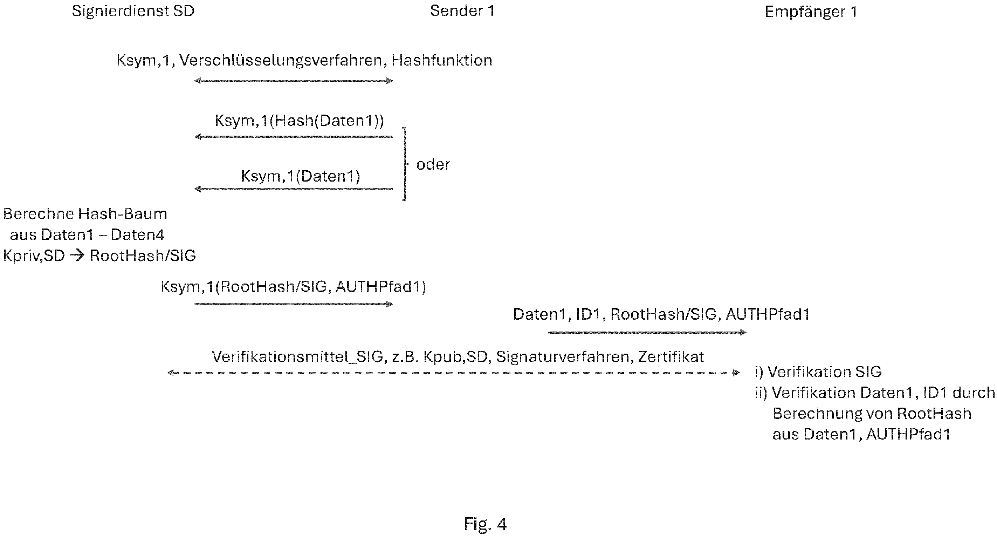

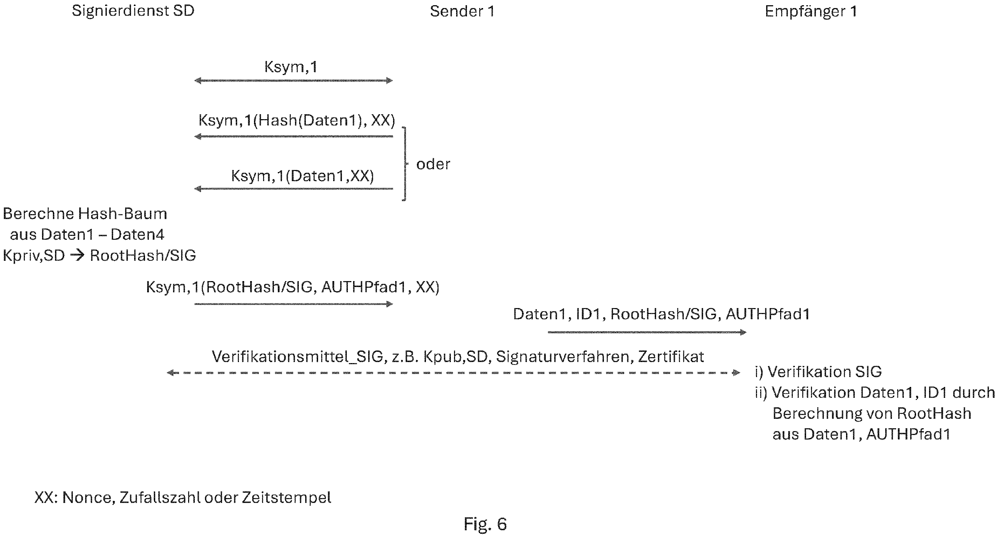

In Fig. 4 - Fig. 6 sind drei Varianten eines erfindungsgemäßen Verfahrens als Ablaufbild von Handlungen und zwischen Sender, Signierdienst und Empfänger ausgetauschten Nachrichten dargestellt. Gemeinsam ist diesen Varianten, dass eine symmetrische Verschlüsselung zwischen Signierdienst und Sender 1 (im Folgenden: Sender) vorgesehen ist, wofür der Schlüssel ksym, 1 ausgetauscht bzw. das Verschlüsselungsverfahren vereinbart wird. Ebenfalls kann gleichzeitig oder per separaten Nachrichtenaustausch eine zu verwendende Hashfunktion festgelegt werden. Diese Hashfunktion sollte auch dem Empfänger bekannt sein bzw. kommuniziert werden (in den Figuren nicht dargestellt). Der Sender schickt vorzugsweise einen geschützten Hashwert Ksym, 1 (Hash(Daten1)) von an den Empfänger zu versendenden Daten oder die verschlüsselten Daten Ksym,1(Daten1) selbst. Der Signierdienst berechnet einen Hash-Baum mit Hilfe des Hashwertes der Daten Daten1 - Daten4 von den vier Sendern (vgl. Fig. 1). Der Root-Hash RootHash wird dann mit einem privaten Schlüssel Kpriv,SD signiert. Der signierte Root-Hash RootHash/SIG und die erforderlichen Informationen des Authentisierungspfades AUTHPfad1 werden mit dem symmetrischen Schlüssel Ksym,1 geschützt an den Sender geschickt. Der Sender sendet die Daten Daten1, seine Identität ID1, den signierten Root-Hash RootHash/SIG und die erforderlichen Authentisierungspfadinformationen AUTHPfad1 an den Empfänger. Der Empfänger verifiziert die Signatur SIG, die Daten Daten1 und die Identität ID1. Für die Verifikation der Signatur SIG werden dafür erforderliche Verifikationsmittel Verifikationsmittel_SIG, z.B. der öffentliche Schlüssel des Signierdienstes Kpub,SD, Informationen zum verwendeten Signaturverfahren, das zugehörige Zertifikat etc., verwendet, die ggf. vorher vom Signierdienst kommuniziert wurden (dies muss nicht zum in der Figur suggerierten Zeitpunkt erfolgen, sondern kann z.B. auch vor der Durchführung des Verfahrens erfolgt sein). Die Verifikation der Daten Daten1 und der Identität ID1 erfolgt durch die Berechnung des Root-Hash RootHash aus den Daten Daten1 bzw. deren Hashwert und den Authentisierungspfadinformationen AUTHPfad1. Sofern die Signatur des Root-Hash erfolgreich verifiziert wird, kann Empfänger 1 von der Korrektheit der Identität ID1 ausgehen.

Die zweite Variante von Fig. 5 unterscheidet sich dadurch, dass zusammen mit den Daten Daten1 bzw. deren Hashwert Hash(Daten1) die Identität ID1 des Senders mitgeteilt wird. Die Identität wird dann zur Bildung des Hash-Baums herangezogen (vgl. Fig. 3), d.h. die Blätter werden durch die Konkatenation von Hashwert und Identität gebildet. Die Authentisierungspfadinformationen AUTHPfad1 enthalten dann auch erforderliche Identitätsinformationen, z.B. ID2 (vgl. Fig. 2).

In der dritten Variante wird an zwischen dem Sender und dem Signierdienst übertragenen Informationen eine Freshness-Information XX angehängt. Bei dieser kann es sich z.B. um eine Nonce, eine Zufallszahl oder einen Zeitstempel handeln.

Die einzelnen Varianten sind auch miteinander kombinierbar.

Die Erfindung hat zahlreiche Vorteile:
- Die Clients benötigen selbst keine Signaturfunktionalität, sondern nur die Unterstützung von symmetrischen Kryptoverfahren (z.B. AEAD, AES, AES-GCM, ASCON, ...).
- Insgesamt sind weniger Signaturen nötig als wie in dem Fall, dass für jeden zu signierende Datensatz eines jeden Clients die Daten einzeln signiert werden. Dies reduziert den Rechenaufwand, insbesondere für Post-Quantum Applikationen (mit rechenaufwendigen Signatur-Algorithmen).
- Die Aktualisierbarkeit des Signaturverfahren (z.B. relevant, falls bei einem Signaturverfahren mit der Zeit Schwachstellen auftreten, oder falls neue Quantencomputer eine Gefahr für klassische Signaturverfahren darstellen) lässt sich deutlich vereinfachen, da nur der Signierdienst sein Signaturverfahren austauschen muss und nicht jeder einzelne Client (bzw. jedes einzelne Gerät). D.h., es besteht eine hohe Kryptoagilität.
- Die Größe des verwendeten Hash-Baums kann dynamisch angepasst werden, sodass die Anzahl von nötigen Signaturen (vom Signierdienst) so stark wie möglich reduziert wird. Dies spart Rechenaufwand, insbesondere, wenn das Signaturverfahren sehr rechenaufwändig ist, wie beispielsweise bei einem Post-Quantum Signaturverfahren.
- Die Größe des verwendeten Hash-Baums kann durch Verfahren der Kl (künstlichen Intelligenz), die die Auslastung überwachen und anhand dieser eine Abschätzung für eine schnelle Signaturerzeugung machen, zur Laufzeit angepasst werden.

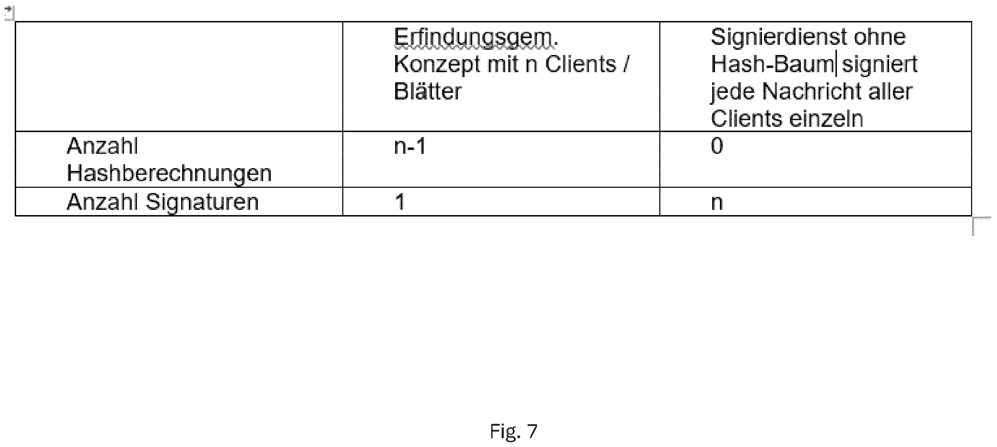

Vergleich von kryptographischen Operationen zwischen dem erfindungsgemäßen Konzept und einer Variante (Stand der Technik), bei dem der Signierdienst für jede Nachricht der Clients eine Signatur einzeln erzeugt, ist in Fig. 7 gezeigt.

## Patentansprüche

1. Verfahren zur sicheren Übertragung von Daten von einem Sender zu einem Empfänger mit Hilfe eines Signierdienstes, umfassend die Schritte
- Senden der Daten oder eines Hashwerts der Daten von dem Sender an den Signierdienst,
- Bilden eines Hash-Baums durch den Signierdienst mit Hilfe des empfangenen Hashwerts oder eines auf Basis der Daten generierten Hashwerts,
- Signieren des Root-Hash-Wertes des Hash-Baums mit einem privaten Schlüssel des Signierdienstes,
- Senden des signierten Root-Hash-Wertes und von Werten eines dem Sender zugeordneten Authentisierungspfads des Hash-Baums vom Signierdienst an den Sender,
- Senden der Daten, des signierten Root-Hash-Wertes und der Werte des dem Sender zugeordneten Authentisierungspfad des Hash-Baums von dem Sender an den Empfänger,
- Verifizieren der Signatur des Root-Hash-Wertes mittels der Signatur zugeordneten Verifizierungsmittel durch den Empfänger, und
- Verifizieren der Daten durch Bildung eines Hashwertes der Daten und Berechnung eines Root-Hash-Wertes aus dem Hashwert der Daten und den Werten des dem Sender zugeordneten Authentisierungspfads des Hash-Baums.

2. Verfahren nach Anspruch 1,
**dadurch gekennzeichnet, dass**
der signierte Root-Hash-Werte und/oder die Werte eines dem Sender zugeordneten Authentisierungspfads des Hash-Baums nicht durch die Schritte
- Senden des signierten Root-Hash-Wertes und von Werten eines dem Sender zugeordneten Authentisierungspfads des Hash-Baums vom Signierdienst an den Sender, und
- Senden der Daten, des signierten Root-Hash-Wertes und der Werte des dem Sender zugeordneten Authentisierungspfad des Hash-Baums von dem Sender an den Empfänger, an den Empfänger gesendet werden, sondern nach Übermittlung einer auf den Empfänger bezogenen Adressinformation direkt von dem Signierdienst and den Empfänger gesendet werden.

3. Verfahren nach Anspruch 1 oder 2,
**dadurch gekennzeichnet, dass**
- zwischen Sender und Signierdienst eine symmetrische Verschlüsselung vereinbart und ein Schlüssel ausgetauscht wird, und
- die Kommunikation zwischen Sender und Signierdienst im Rahmen des Verfahrens mit Hilfe des ausgetauschten Schlüssels geschützt wird.

4. Verfahren nach einem der vorhergehenden Ansprüche, **dadurch gekennzeichnet, dass** die der Signatur zugeordneten Verifizierungsmittel einen dem Signierdienst zugehörigen öffentlichen Schlüssel und/oder ein dem Signierdienst zugehöriges Zertifikat umfassen.

5. Verfahren nach einem der vorhergehenden Ansprüche,
**dadurch gekennzeichnet, dass**
- durch den Sender eine Identifikationsinformation an den Signierdienst übermittelt wird, und
- der Hash-Baum mit Hilfe der Identifikationsinformation gebildet wird.

6. Verfahren nach einem der vorhergehenden Ansprüche 3 oder 5,
**dadurch gekennzeichnet, dass**
- mit den Daten, den signierten Root-Hash-Werte und den Werten des dem Sender zugeordneten Authentisierungspfad des Hash-Baums auch eine Identifikationsinformation von dem Sender an den Empfänger gesendet wird, und
- durch den Sender eine Verifikation der Identitätsinformation vorgenommen wird.

7. Verfahren nach einem der vorhergehenden Ansprüche,
**dadurch gekennzeichnet, dass**
- beim Senden der Daten oder eines Hashwerts der Daten an den Signierdienst eine Freshness-Information mitgesendet wird, und
- beim Senden des signierten Root-Hash-Wertes und von Werten eines dem Sender zugeordneten Authentisierungspfads des Hash-Baums vom Signierdienst an den Sender die Freshness-Information zurückgesendet wird.

8. Verfahren nach einem der vorhergehenden Ansprüche,
**dadurch gekennzeichnet, dass**
der Hash-Baum mit Hashwerten von Daten einer Mehrzahl von verschiedenen Sendern gebildet wird.

9. Verfahren nach Anspruch 8,
**dadurch gekennzeichnet, dass**
eine Mehrzahl von Blättern des Hash-Baums mit verschiedenen Daten desselben Senders gebildet werden, wenn entsprechend mehrere Signieranforderungen von diesem Sender anfallen, bevor zur Bildung des Hash-Baums ausreichend Daten anderer Sender empfangen wurden.

10. Verfahren nach Anspruch 8 oder 9,
**dadurch gekennzeichnet, dass**
der Hash-Baum mit zusätzlichen Dummy-Werten gebildet wird, wenn nicht ausreichend Daten von verschiedenen Sendern zur Verfügung stehen.

11. Verfahren nach einem der vorhergehenden Ansprüche,
**dadurch gekennzeichnet, dass** die Größe des Hash-Baums nach Maßgabe der Anzahl der Signierungsanforderungen von Sendern dynamisch angepasst wird.

12. Verfahren nach einem der vorhergehenden Ansprüche,
**dadurch gekennzeichnet, dass**
das Signaturverfahren des Signierdienstes zum Signieren des Root-Hash-Wertes durch eine berechtigte Instanz aktualisierbar ist.

13. Signierdienst, der zum Bilden eines Hash-Baums nach Maßgabe von Sendern empfangenen Signieranforderungen für eine sicheren Übertragung von Daten von den jeweiligen Sendern zu Empfängern mit Hilfe des Signierdienstes nach einem Verfahren nach einem der Ansprüche 1 bis 11 ausgebildet ist.

14. Anordnung umfassend einen Signierdienst nach Anspruch 13,
bestehend aus einer Vorrichtung oder aus einer eine Mehrzahl von Vorrichtungen, auf welcher bzw. auf welchen der Signierdienst realisiert ist.

15. System umfassend einen Signierdienst nach Anspruch 13, einen Sender und einen Empfänger, welches zur Durchführung eines Verfahrens nach einem der Ansprüche 1 bis 12 ausgebildet ist.

16. System nach Anspruch 15, umfassend eine Mehrzahl von Sendern und Empfängern, wobei der Signierdienst einen Hash-Baum umfasst, der mit Daten von der Mehrzahl von Sendern gebildet ist.
